# EUROPÄISCHE PATENTSCHRIFT

(11) **EP 3 720 694 B1**
(45) Veröffentlichungstag und Bekanntmachung des Hinweises auf die Patenterteilung: **21.12.2022**
(21) Anmeldenummer: 18773405.8
(22) Anmeldetag: 18.09.2018
(51) Int. Cl.: B29D 30/06

(54) **HEIZPRESSE MIT EINEM BELADER UND EINEM ENTLADER**
HEAT PRESS COMPRISING A LOADER AND AN UNLOADER
PRESSE CHAUFFANTE COMPRENANT UN CHARGEUR ET UN DÉCHARGEUR

(30) Priorität: 04.12.2017 DE 102017221822
(43) Veröffentlichungstag der Anmeldung: 14.10.2020
(73) Patentinhaber: Continental Reifen Deutschland GmbH, 30165 Hannover (DE); Harburg-Freudenberger Maschinenbau GmbH, 21079 Hamburg (DE)
(72) Erfinder: SCIFONI, Giuseppe, 30419 Hannover (DE); MEINCKE, Rüdiger, 30419 Hannover (DE)
(74) Vertreter: Vinazzer, Edith
(86) Internationale Anmeldenummer: PCT/EP2018/075119
(87) Internationale Veröffentlichungsnummer: WO 2019/110157

(56) Entgegenhaltungen:
- EP-A1- 0 106 947
- EP-A1- 1 642 695
- EP-A1- 2 965 894
- EP-A1- 3 033 187
- DE-A1-102016 006 518
- US-A- 5 741 528
- US-A1- 2011 088 812

## Beschreibung

Die Erfindung betrifft eine Heizpresse mit einem Belader zum Beladen der Heizpresse mit einem Reifenrohling und mit einem Entlader zum Entladen des vulkanisierten Reifens, wobei der Belader und der Entlader jeweils ein Schwenksystem mit einem an einer höhenverstellbar gelagerten Halteeinrichtung horizontal schwenkbar angeordneten Schwenkarm mit einer Reifengreifeinrichtung mit einer Anzahl von Reifengreifern aufweisen, welche mittels Hydraulikzylinder beweg- und verstellbar sind.

Bei herkömmlichen Heizpressen erfolgt das Schwenken der Schwenkarme des Entladers und des Beladers mittels pneumatischer Zylinder. Dadurch lässt sich die Geschwindigkeit der Schwenkbewegung kaum beeinflussen oder kontrollieren. Die Positionierung der Start- und der Stoppposition erfordert das Verwenden mechanischer Stopper. Wird ein mechanische Stopper lose wird die erwünschte Position nicht mehr eingehalten und muss manuell eingestellt und daher auch häufig überprüft werden. Die Geschwindigkeit, mit welcher die Schwenkbewegung der Schwenkarme durchgeführt wird, ist vom Zustand der pneumatischen Zylinder und deren Dichtungen stark abhängig. Beim Belader wird üblicherweise die Anfahrgeschwindigkeit des Schwenkarmes mittels eines Stoßdämpfers abgebremst, um ein Verrutschen des Reifenrohlings an der Greifeinrichtung zu vermeiden.

Eine Heizpresse eingangs genannter Art ist aus der US 2011/088812 A1 bekannt. Diese Heizpresse weist einen Belader und einen Entlader auf, welche als zentralen Bestandteil einen Ladearm aufweisen, welcher variabel bewegbar und drehbar ist. Auf einem am Ladearm vorgesehenen Zusatzarm ist eine Reifengreifeinrichtung angeordnet, die mittels eines Pneumatikzylinders oder eines Hydraulikzylinders betätigt wird. Die Bewegung des Ladearms kann mittels eines Steuersystems und mittels Sensoren gesteuert werden.

Aus der US 5,741,528 ist ein Reifenvulkanisationssystem mit einer Anzahl von Reifenvulkanisierpressen mit Beladern und Entladern bekannt. Bei einer Ausführung eines Entladers ist ein Hebe- oder Absenkelement an einer mittels eines Servomotors drehbaren Schraubenwelle an- und absenkbar angeordnet, wobei eine Hülse vorgesehen ist, welche mit einem Innengewinde mit der Schraubenwelle in Eingriff steht. Außen auf der Hülse ist ein Arm drehbar gelagert, dessen Drehposition durch einen Servomotor geändert werden kann.

Die EP 2 965 894 A1 befasst sich mit einem Verfahren und einer Vorrichtung zum Korrigieren der Form eines grünen, daher unvulkanisierten Reifens mit Seitenwänden, die lokal in Umfangsrichtung einer Quetschverformung ausgesetzt wurden. Die Vorrichtung weist einen oberen Halter auf, welcher über einen Schwenkmechanismus mit einem Antriebsmotor und einem externen Getriebe betätigt wird, um dreidimensional bewegt werden zu können.

Der Erfindung liegt die Aufgabe zugrunde, bei einer Vorrichtung eingangs genannter Art die Schwenksysteme des Beladers und des Entladers derart auszuführen, dass manuelle Einstellungen der Start- und Stoppposition und das Verwenden mechanischer Stoppvorrichtungen entfallen können.

Gelöst wird die gestellte Aufgabe erfindungsgemäß dadurch, dass die Schwenkbewegung eines Schwenkarmes
entweder automatisch über eine Software gesteuert mittels eines auf der Haltevorrichtung angeordneten Servomotors mit Getriebe erfolgt, wobei die Haltevorrichtung mitsamt Servomotor und Getriebe sowie mitsamt dem Schwenkarm in vertikaler Richtung beweg- und verstellbar ist,
oder mittels eines am Schwenkarm angreifenden hydraulischen Zylinders erfolgt, wobei der Schwenkwinkel mittels eines Wegmesssystems gesteuert wird, welches den Schwenkwinkel ermittelt und Signale an ein Steuergerät übermittelt, um derart die Startposition und die Stoppposition zu bestimmen.

Ein Schwenksystem mit einem über ein Wegmesssystem gesteuerten hydraulischen Zylinder hat gegenüber einem pneumatischen Zylinder vor allem die Vorteile, dass der hydraulische Zylinder eine genauere Bewegung des Schwenkarmes erlaubt und dass mittels des Wegmesssystems die Startposition und die Stoppposition des Schwenkarmes bestimm- bzw. einstellbar ist und eine genaue Einstellung des Schwenkwinkels möglich ist. Ein derartiges Schwenksystem lässt sich ferner auf sehr einfache Weise mit dem Schwenkarm koppeln und ist kostengünstig. Ein Schwenksystem mit einem softwaregesteuerten Servomotor mit Getriebe gestattet eine besonders exakte Einstellung des Schwenkwinkels und eine Steuerung der Durchführung der Schwenkbewegung hinsichtlich Geschwindigkeit, Beschleunigung und Verzögerung und kann somit die Zykluszeit merklich verkürzen. Bei beiden Schwenksystemen sind keine manuelle Einstellungen der Start- und Stoppositionen sowie kein Vorsehen von mechanischen Stoppern und Stoßdämpfern erforderlich. Beide Varianten von Schwenksystemen gestatten eine vollautomatische Betätigung des Beladers und des Entladers und können wahlweise beim Belader oder beim Entlader eingesetzt werden.

Besondere bevorzugt ist jedoch eine Ausführung der Heizpresse, bei welcher der Belader ein Schwenksystem aufweist, dessen Schwenkarm mittels des softwaregesteuerten Servomotors mit Getriebe bewegbar ist. Der hinsichtlich Verformung noch heikle Reifenrohling lässt beim Beladen mit diesem System durch eine entsprechende Steuerung schonend und gleichzeitig rationell handhaben.

Besonders bevorzugt ist ferner eine Ausführung der Heizpresse, bei welcher der Entlader ein Schwenksystem aufweist, dessen Schwenkarm mittels des über ein Wegmesssystem gesteuerten hydraulischen Zylinders bewegbar ist. Diese einfache und kostengünstige Ausführung ist für den Entladevorgang des vulkanisierten Reifens besondere gut geeignet.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Ansicht einer Ausführungsvariante einer Schwenkvorrichtung eines Beladers einer Heizpresse und
Fig. 2 eine Ansicht einer Ausführungsvariante einer Schwenkvorrichtung eines Entladers einer Heizpresse.

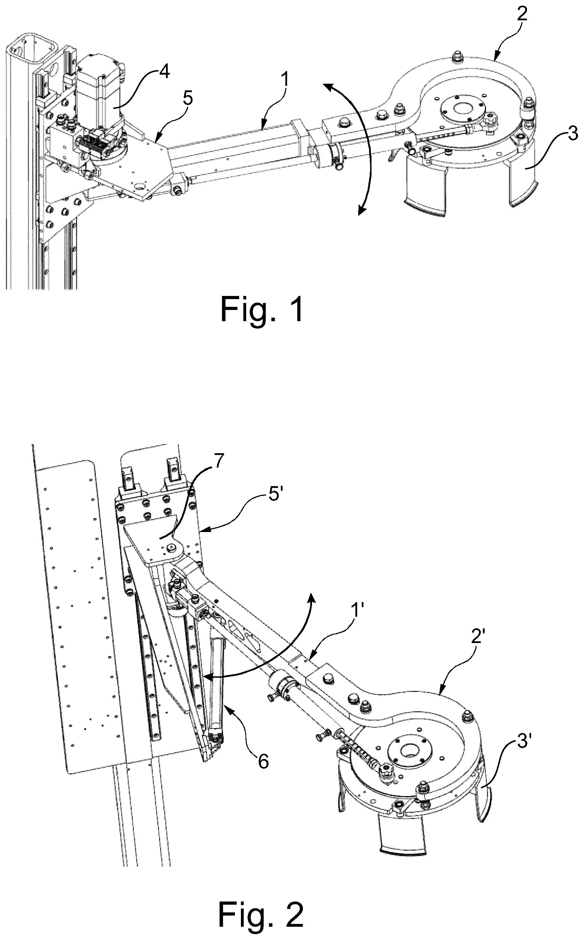

Die in Fig. 1 gezeigte Schwenkvorrichtung ist Bestandteil eines Beladers einer Heizpresse zum Beladen einer Vulkanisationsform der Heizpresse mit einem Reifenrohling zum Vulkanisieren desselben. Fig. 2 zeigt eine Schwenkvorrichtung, die Bestandteil eines Entladers der Heizpresse ist, welcher den vulkanisierten Reifen der geöffneten Vulkanisationsform entnimmt.

Die Schwenkvorrichtung des Beladers weist einen an einer höhenverstellbar gelagerten Halteeinrichtung 5 schwenkbar angeordneten Schwenkarm 1 auf, an welchem eine Reifengreifeinrichtung 2 mit einer Anzahl von im gezeigten Beispiel vier Reifengreifern 3 vorgesehen sind, welche mittels Hydraulikzylinder beweg- und verstellbar sind, um derart einen Reifenrohling am Außenumfang in an sich bekannter Weise erfassen zu können. Der Schwenkarm 1 ist mittels eines auf der Haltevorrichtung 5 angeordneten Servomotors 4 mit Getriebe horizontal, wie durch den Doppelpfeil in Fig. 1 angedeutet, bewegbar. Die Haltevorrichtung 5 ist mitsamt Servomotor 4 und Getriebe sowie mitsamt dem Schwenkarm 1 in vertikaler Richtung beweg- und verstellbar. Die Schwenkbewegung des Schwenkarmes 1 zum Beladen der Heizpresse mit einem Reifenrohling erfolgt automatisch über eine Software gesteuert, die es gestattet, den erwünschten, definierten Winkel der Schwenkbewegung, die Geschwindigkeit der Schwenkbewegung, das Beschleunigen und Verzögern der Schwenkbewegung einzustellen und entsprechend zu steuern, sodass die Zykluszeit der Vorrichtung kurz gehalten wird und die Genauigkeit der Beladung gegenüber den bislang bekannten Vorrichtungen wesentlich verbessert ist.

Die in Fig. 2 gezeigte Ausführung der Schwenkvorrichtung des Entladers der Heizpresse weist ebenfalls einen an einer höhenverstellbar gelagerten Halteeinrichtung 5' schwenkbar angeordneten Schwenkarm 1' auf, welcher mit einer im gezeigten Beispiel vier Reifengreifer 3' aufweisenden Reifengreifeinrichtung 2' versehen ist. Die Schwenkbewegung ist ebenfalls durch einen Doppelpfeil angedeutet. Die Reifengreifer 3' sind mittels Hydraulikzylinder beweg- und verstellbar, um derart einen vulkanisierten Reifen am Außenumfang in an sich bekannter Weise zu erfassen. Die Schwenkbewegung des Schwenkarmes 1' erfolgt mittels eines am Schwenkarm 1' angreifenden hydraulischen Zylinders 6, wobei der Schwenkwinkel mittels eines Wegmesssystems 7 gesteuert wird. Das Wegmesssystem 7 ermittelt den Schwenkwinkel und übermittelt Signale an ein Steuergerät, um derart die Startposition und die Stoppposition zu bestimmen. Der über das Wegmesssystem 7 gesteuerte hydraulische Zylinder 6 erlaubt eine für das Entladen des vulkanisierten Reifens aus der Heizpresse hinreichend genaue Schwenkbewegung des Schwenkarmes 1'. Im Gegensatz zu einem softwaregesteuerten Schwenksystem mit Servomotor und Getriebe ist bei dieser Ausführung jedoch weder die Geschwindigkeit noch eine Beschleunigung oder eine Verzögerung der Bewegung des Schwenkarmes 1' einstellbar.

### Bezugszeichenliste

- 1, 1': Schwenkarm
- 2, 2': Greifeinrichtung
- 3, 3': Reifengreifer
- 4: Servomotor
- 5, 5': Haltevorrichtung
- 6: hydraulischer Zylinder
- 7: Wegmesssystem

## Patentansprüche

1. Heizpresse mit einem Belader zum Beladen der Heizpresse mit einem Reifenrohling und mit einem Entlader zum Entladen des vulkanisierten Reifens, wobei der Belader und der Entlader jeweils ein Schwenksystem mit einem an einer höhenverstellbar gelagerten Halteeinrichtung (5, 5') horizontal schwenkbar angeordneten Schwenkarm (1, 1') mit einer Reifengreifeinrichtung (2, 2') mit einer Anzahl von Reifengreifern (3, 3') aufweisen, welche mittels Hydraulikzylinder beweg- und verstellbar sind,
**dadurch gekennzeichnet,**
**dass** die Schwenkbewegung eines Schwenkarmes (1, 1')
entweder automatisch über eine Software gesteuert mittels eines auf der Haltevorrichtung (5) angeordneten Servomotors (4) mit Getriebe erfolgt, wobei die Haltevorrichtung (5) mitsamt Servomotor (4) und Getriebe sowie mitsamt dem Schwenkarm (1) in vertikaler Richtung beweg- und verstellbar ist,
oder mittels eines am Schwenkarm (1)' angreifenden hydraulischen Zylinders (6) erfolgt, wobei der Schwenkwinkel mittels eines Wegmesssystems (7) gesteuert wird, welches den Schwenkwinkel ermittelt und Signale an ein Steuergerät übermittelt, um derart die Startposition und die Stoppposition zu bestimmen.

2. Heizpresse nach Anspruch 1, **dadurch gekennzeichnet, dass** der Belader ein Schwenksystem aufweist, dessen Schwenkarm (1) mittels des softwaregesteuerten Servomotors (4) mit Getriebe bewegbar ist.

3. Heizpresse nach Anspruch 1, **dadurch gekennzeichnet, dass** der Entlader ein Schwenksystem aufweist, dessen Schwenkarm (1') mittels des über ein Wegmesssystem (7) gesteuerten hydraulischen Zylinders (6) bewegbar ist.

## Claims

1. Heating press with a loader for loading the heating press with a green tyre and with an unloader for unloading the vulcanized tyre, wherein the loader and the unloader each have a pivoting system with a pivoting arm (1, 1') arranged in a horizontally pivotable manner on a height-adjustable holding device (5, 5'), said pivoting arm having a tyre gripping device (2, 2') with a number of tyre grippers (3, 3') which are movable and adjustable by means of hydraulic cylinders,
**characterized in that**
the pivoting movement of a pivoting arm (1, 1')
takes place either automatically via software by means of a servo motor (4) with gears arranged on the holding device (5), wherein the holding device (5) along with the servo motor (4) and gears and also along with the pivoting arm (1) is movable and adjustable in the vertical direction,
or by means of a hydraulic cylinder (6) engaging with the pivoting arm (1)', wherein the pivot angle is controlled by means of a path measuring system (7) which determines the pivot angle and transmits signals to a control unit, so that the starting and stopping position is thereby determined.

2. Heating press according to Claim 1, **characterized in that** the loader has a pivoting system, the pivoting arm (1) of which can be moved by means of the software-controlled servo motor (4) with gears.

3. Heating press according to Claim 1, **characterized in that** the unloader has a pivoting system, the pivoting arm (1') of which can be moved by means of the hydraulic cylinder (6) controlled via a path measuring system (7).

## Revendications

1. Presse chauffante avec un chargeur pour charger la presse chauffante avec une ébauche de pneu et avec un déchargeur pour décharger le pneu vulcanisé, le chargeur et le déchargeur présentant chacun un système de pivotement pourvu d'un bras pivotant (1, 1') disposé de manière à pouvoir pivoter horizontalement sur un dispositif de maintien (5, 5') logé de manière réglable en hauteur, avec un dispositif de préhension de pneu (2, 2') avec un certain nombre de pinces de pneu (3, 3') qui sont mobiles et réglables au moyen de vérins hydrauliques,
**caractérisée en ce que**
le mouvement de pivotement d'un bras pivotant (1, 1')
s'effectue soit automatiquement, par le biais d'un logiciel, à l'aide d'un servomoteur (4) avec engrenage disposé sur le dispositif de maintien (5), le dispositif de maintien (5), y compris le servomoteur (4) et l'engrenage ainsi que le bras pivotant (1) étant mobile et réglable dans le sens vertical,
ou au moyen d'un vérin hydraulique (6) agissant sur le bras pivotant (1'), l'angle de pivotement étant commandé au moyen d'un système de mesure de déplacement (7) qui détermine l'angle de pivotement et transmet des signaux à un appareil de commande afin de déterminer ainsi la position de départ et la position d'arrêt.

2. Presse chauffante selon la revendication 1, **caractérisée en ce que** le chargeur présente un système de pivotement dont le bras pivotant (1) peut être déplacé au moyen du servomoteur (4) avec engrenage commandé par logiciel.

3. Presse chauffante selon la revendication 1, **caractérisée en ce que** le déchargeur présente un système de pivotement dont le bras pivotant (1') peut être déplacé au moyen du vérin hydraulique (6) commandé par un système de mesure de déplacement (7).
